# EUROPEAN PATENT APPLICATION

(11) **EP 2 383 936 A1**
(43) Date of publication of application: **02.11.2011**
(21) Application number: 09837331.9
(22) Date of filing: 26.10.2009
(51) Int. Cl.: H04L 12/26, H04L 12/66

(54) **METHOD, DEVICE AND SYSTEM OF PERFORMING CONNECTIVITY CHECK**

(30) Priority: 12.01.2009 CN 200910001787
(71) Applicant: Huawei Technologies Co., Ltd., Shenzhen, Guangdong 518129 (CN)
(72) Inventor: ZHU, Ning, Guangdong 518129 (CN)
(74) Representative: Körber, Martin Hans
(86) International application number: PCT/CN2009/074616
(87) International publication number: WO 2010/078774

(57) **Abstract**

The present invention relates to the field of communication technologies and discloses a method, device, and system for connectivity check. The method includes the following: a Media Gateway (MGW) receives an Additional Connectivity Check message sent by a Media Gateway Controller (MGC); and the MGW performs an additional connectivity check according to the Additional Connectivity Check message. With the connectivity check method, device, and system of the present invention, the efficiency of the connectivity check may be improved.

## Description

This application claims priority to Chinese Patent Application No. 200910001787.2, filed with the Chinese Patent Office on January 12, 2009 and entitled "Method, Device, and System for Connectivity Check", which is incorporated herein by reference in its entirety.

### FIELD OF THE INVENTION

The present invention relates to the field of communication technologies, and in particular, to a method, device, and system for connectivity check.

### BACKGROUND OF THE INVENTION

With a softswitching device as a core, the Next Generation Network (NGN) emerges as driven by service development and under the trend that networks converge.

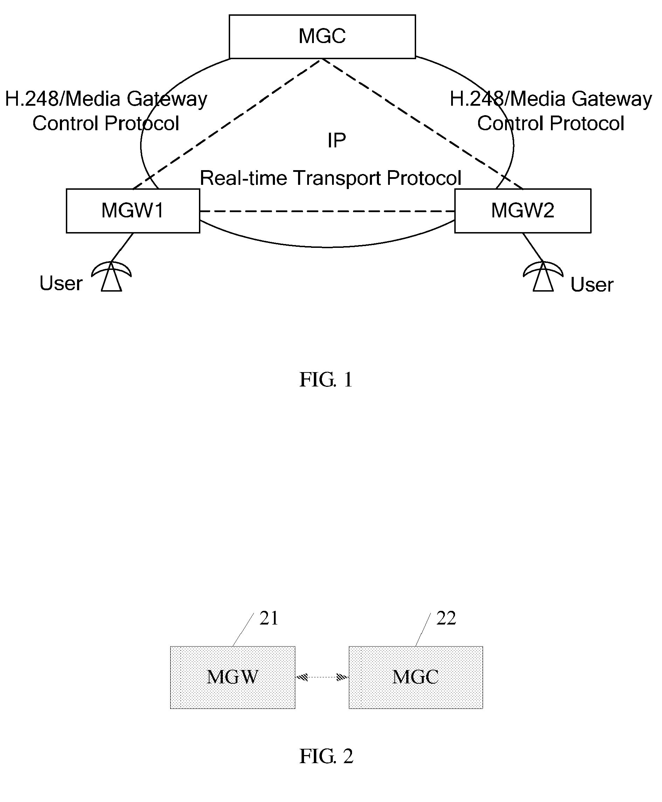

As shown in FIG. 1, in the prior art, an NGN structure includes a Media Gateway (MGW) and a Media Gateway Controller (MGC). If +MGW1 and MGW2 are in the same private or public bearer network, Internet Protocol (IP) packets exchanged between MGW1 I and MGW2 can be sent to each other directly. However, if MGW1 and MGW2 are in different bearer networks, for example, if MGW1 is in a public network and MGW2 is in a private network, or if both MGW1 and MGW2 are in a private network but IP packets cannot be sent directly in both ways between the two networks, media streams between MGW1 and MGW2 may possibly be one-way connective or non-connective.

A common method for the transmission of IP packets between a private network and a public network is to use Network Address Translation (NAT) that translates internal private network addresses into IP addresses of external public networks. With the development of NAT, NAT traversal techniques, such as Simple Traversal of UDP Through Network Address Translators (STUN), Traversal Using Relay NAT (TURN), and Interactive Connectivity Establishment (ICE), emerge, and NAT traversal can connect the private IP address of a private network terminal to a public network through an egress Network Access Translator (NAT) or a firewall (FW).

ICE is not a new protocol. ICE uses some of the preceding protocols comprehensively so that the protocols can work in the most proper conditions, thus offsetting the inherent defects coming with the use of any one of the protocols. Being independent of a specific signaling protocol, the traversal of media streams through NAT happens between two clients: the session initiator and the session responder. When a media stream is delivered, the session participants exchange their local transmission address and source transmission address to generate an address pair of the local candidate and remote candidate. A connectivity check is performed on all address pairs according to their priorities, and the connectible address pair with the highest priority is chosen for the transmission of the media stream.

During the process of connectivity check, an MGW sends an STUN request from addresses of local candidates to addresses of remote candidates in sequence; and the remote candidate carries a mapped address in a response message. If the mapped address differs from the addresses of all local candidates, the mapped address is a new local candidate and is referred to as a peer reflexive candidate.

During the implementation of the present invention, the inventor discovers the following problem: When a connectivity check is being performed or has been completed, an MGC may instruct an MGW to add a new stream. The new stream or new peer reflexive candidate is an update to the candidate pair. When a new connectivity check is initiated, some candidate pairs that are already checked are checked again. This affects the efficiency of the connectivity check.

### SUMMARY OF THE INVENTION

Embodiments of the present invention provide a method, device, and system for connectivity check to improve the efficiency of the connectivity check.

Embodiments of the present invention adopt the following technical solution:

A method for connectivity check includes:
receiving, by an MGW, an Additional Connectivity Check message sent by an MGC; and
performing, by the MGW, an additional connectivity check according to the Additional Connectivity Check message.

A method for connectivity check includes:
generating, by an MGC, an Additional Connectivity Check message; and
sending, by the MGC, the Additional Connectivity Check message to an MGW, so as to enable the MGW to perform an additional connectivity check.

An MGW includes:
a message receiving unit, configured to receive an Additional Connectivity Check message sent by an MGC; and
a connectivity check unit, configured to perform an additional connectivity check according to the Additional Connectivity Check message.

An MGC includes:
a message generating unit, configured to generate an Additional Connectivity Check message; and
a message sending unit, configured to send the Additional Connectivity Check message to an MGW, so as to enable the MGW to perform an additional connectivity check.

A system for connectivity check includes an MGW and an MGC, where:
the MGW is configured to receive an Additional Connectivity Check message sent by the MGC and perform an additional connectivity check according to the Additional Connectivity Check message; and
the MGC is configured to generate an Additional Connectivity Check message and send the Additional Connectivity Check message to the MGW, so as to enable the MGW to perform an additional connectivity check.

In the method, device, and system for connectivity check provided in the embodiments of the present invention, an MGW performs an additional connectivity check according to an Additional Connectivity Check message sent by an MGC. Therefore, with the technical solution provided in embodiments of the present invention, a connectivity check can be performed on a new candidate according to the Additional Connectivity Check message, thus improving the efficiency of the connectivity check.

### BRIEF DESCRIPTION OF THE DRAWINGS

To better explain the technical solution provided in embodiments of the present invention, the accompanying drawings required in the description of embodiments are briefly described. It is apparent that the accompanying drawings illustrate only some exemplary embodiments of the present invention. Those skilled in the art may derive other drawings from these drawings without creative efforts.
FIG. 1 is a schematic diagram of an NGN network in the prior art;
FIG. 2 is a schematic diagram of a system for connectivity check according to a first embodiment of the present invention;
FIG. 3 is a flowchart of a method for connectivity check according to a third embodiment of the present invention;
FIG. 4 is a flowchart of a method for connectivity check according to a fifth embodiment of the present invention;
FIG. 5 is a flowchart of a method for connectivity check according to a sixth embodiment of the present invention;
FIG. 6 is an architecture diagram of an MGW according to a seventh embodiment of the present invention;
FIG. 7 is a schematic diagram of an MGW according to the seventh embodiment of the present invention;
FIG. 8 is an architecture diagram of an MGC according to an eighth embodiment of the present invention; and
FIG. 9 is a schematic diagram of an MGC according to the eighth embodiment of the present invention.

### DETAILED DESCRIPTION OF THE EMBODIMENTS

To better explain the technical solution provided in embodiments of the present invention, the embodiments of the present invention are described in detail with reference to the accompanying drawings. It is apparent that the embodiments herein are only some exemplary embodiments of the present invention. Based on the embodiments herein, those skilled in the art may derive other embodiments without creative efforts and such other embodiments all fall within the protection scope of the present invention.

### Embodiment 1

To improve the efficiency of a connectivity check, a first embodiment of the present invention provides a system for connectivity check. As shown in FIG. 2, the system includes an MGW 21 and an MGC 22.

The MGW 21 is configured to receive an Additional Connectivity Check message sent by the MGC 22 and perform an additional connectivity check according to the Additional Connectivity Check message; the MGC 22 is configured to generate an Additional Connectivity Check message and send the Additional Connectivity Check message to the MGW 21 to instruct the MGW 21 to perform an additional connectivity check.

In the system provided in this embodiment of the present invention, the Additional Connectivity Check message may be generated by the MGC according to a new candidate discovered in a connectivity check process of the MGW. For example, when detecting a new peer reflexive candidate, the MGW instructs the MGC to generate the Additional Connectivity Check message. Or, when a new media stream is added and/or when an existing media stream is modified, the MGC generates the Additional Connectivity Check message according to practical requirements. The media stream may be referred to as a stream and the new media stream may be referred to as a new stream. Modifying an existing media stream may be referred to as modifying an existing stream. A specific operation of stream addition is as follows: The MGC adds a new stream in a media descriptor in a message sent to the MGW. For example, the existing stream is only a voice stream and now a video stream is added. A specific operation of stream modification is as follows: When a peer device discovers a peer reflexive candidate, the peer device instructs a local device to update information of the remote candidate in the stream; or the peer device adds a new media capability in the existing stream or modifies the existing media capability to cause change of the candidate. Stream modification includes modification to the local candidate and/or remote candidate in the existing stream.

It can be seen from the preceding description that, in the system for connectivity check in this embodiment of the present invention, the MGW performs an additional connectivity check according to an Additional Connectivity Check message sent by the MGC. Therefore, by using the technical solution in this embodiment of the present invention, a connectivity check can be performed on a new candidate according to the Additional Connectivity Check message, thus improving the efficiency of the connectivity check.

### Embodiment 2

A second embodiment of the present invention provides a method for connectivity check, including the following steps:
Step 31: An MGW receives an Additional Connectivity Check message sent by an MGC.
   As described in the first embodiment, the Additional Connectivity Check message is generated by the MGC according to a new candidate discovered in a connectivity check process of the MGW. Or, when a new media stream is added or when an existing media stream is required to be modified, the MGC spontaneously generates the Additional Connectivity Check message according to practical requirements.
Step 32: The MGW performs an additional connectivity check according to the Additional Connectivity Check message.
   The following describes how a connectivity check is performed in the two scenarios of step 31 with reference to the third and fourth embodiments of the present invention.

### Embodiment 3

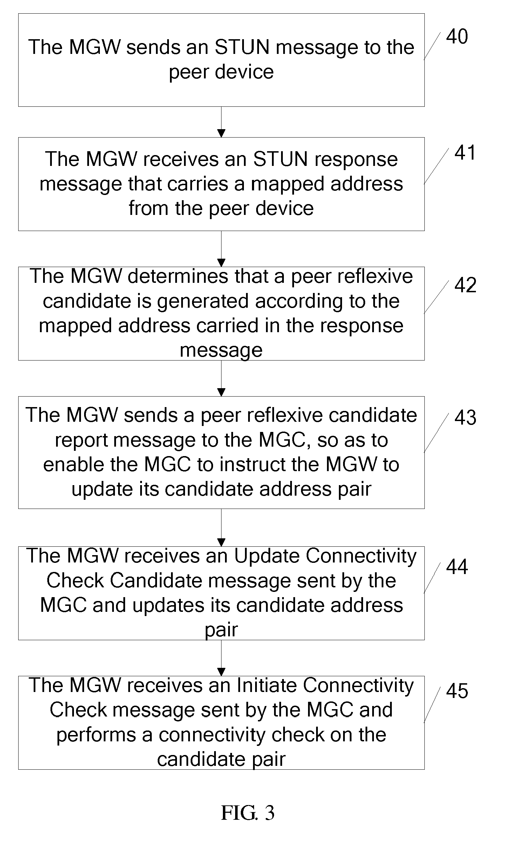

As shown in FIG. 3, a method for connectivity check in the third embodiment of the present invention includes the following steps:
Step 40: The MGW sends an STUN message to the peer device in a connectivity check process.
Step 41: The MGW receives an STUN response message sent by the peer device, where the response message carries a mapped address.
Step 42: The MGW determines that a peer reflexive candidate is generated according to the mapped address carried in the response message.
   In this step, the MGW compares the mapped address in the response message with local candidate addresses one by one. If the mapped address is different from all local candidate addresses, the MGW determines that a peer reflexive candidate is generated; if the mapped address is identical with one of all local candidate addresses, the MGW determines that no peer reflexive candidate is generated.
Step 43: The MGW sends a peer reflexive candidate report message to the MGC, so as to enable the MGC to instruct the MGW to update its candidate address pair. The sequence of the MGC instructing the peer device to update its candidate address pair and the MGC instructing the MGW to update its candidate address pair may be inversed. When the candidate of one end of the connectivity check changes, the candidate addresses stored on both ends must be refreshed so that the candidate address pair on both the local and the peer devices can be changed.

The peer reflexive candidate report message carries a new peer reflexive candidate event extended from the H.248 protocol by the embodiment of the present invention. For example, a New Peer Reflexive Candidate (nprc) event is defined by extending the H.248 protocol to notify the MGC that a peer reflexive candidate is generated in the connectivity check process. Furthermore, the reported nprc event carries one or more kinds of information listed in Table 1 through the parameters of the report event.

**Table 1**

| Parameter Name | Data Type of Parameter | Description of Parameter |
|---|---|---|
| streamID | Integer | Identifies the stream carrying the new peer reflexive candidate. |
| groupID | Integer | Indicates the group ID of the new peer reflexive candidate in the Session Description Protocol (SDP) descriptor in the H.248 message. |
| foundationID | Integer | Identifies the foundation of the connectivity check of the new peer reflexive candidate. |
| componentID | Integer | Identifies the component number of the connectivity check of the new peer reflexive candidate. |
| connection-address | Integer | Includes an IP address and a port number. The IP address and port number are separated by a colon, for example, "10.11.1.100:10000". |

The MGW carries the information in Table 1 through the parameters of the reported nprc event to send to the MGC the information that the peer reflexive candidate is generated in the connectivity check. Other parameters may be extended in the nprc event to carry more information. Such parameters will not be listed here.

A specific form of report parameter extension is as follows:
A report event parameter Candidate is extended for the nprc event. The Candidate parameter is a character string in the following ABNF format:
   StreamID "I" GroupID "I" FoundationID "I" ComponentID "I" connection-address COLON PortNumber
   StreamID = UINT16
   GroupID = UINT16
   Foundation = UINT16
   Component-id = UINT16
   connection-address = IP4-address
   PortNumber = UINT16

In this way, a string carries all information described in the preceding table.

In addition, the nprc event must be set on the MGW before being reported. The setting method includes: The MGC sets the event for the MGW, or the event is pre-configured on the MGW, for example, the event is set to a permanent event.

Step 44: The MGW receives an Update Connectivity Check Candidate message sent by the MGC and updates its candidate address pair.

In practice, the Update Connectivity Check Candidate message may be a MODIFY message or other messages that can carry the Update Connectivity Check Candidate message, such as ADD message or MOVE message. The Update Connectivity Check Candidate message may carry the updated connectivity check candidate information through SDP in an H.248 message, including the update of the local candidate and/or remote candidate. The updated connectivity check candidate may cause refresh of the connectivity check candidate pair list. In this way, the connectivity check candidate pair shared by both ends of the connectivity check is modified.

Step 45: The MGW receives a Connectivity Check message Initiated by the MGC and performs a connectivity check on the candidate pair.

In this step, the Connectivity Check message may be a connectivity check from beginning message, such as a Send Connectivity Check (scc) signal in an ostuncc package of H.248.50, or may be the Additional Connectivity Check message extended by the present invention.

If the Connectivity Check message is a connectivity check from beginning message, the MGW performs a connectivity check on all candidate addresses from the beginning.

If the Connectivity Check message is an Additional Connectivity Check message, the MGW performs an update connectivity check. That is, the MGW performs an additional connectivity check. The MGW checks the connectivity of new candidate pair and does not check candidate pairs whose connectivity is already checked. Under this circumstance, the MGW does not perform a connectivity check on candidate pairs that are already checked. On the basis that the connectivity check results of those already checked continue to be effective, the MGW performs a connectivity check on the connectivity check candidate pair list refreshed due to the change of candidates. Therefore, the connectivity check efficiency of the MGW is improved.

In this embodiment of the present invention, the Additional Connectivity Check message carries a Send Additional Connectivity Check (sacc) signal extended in the present invention to indicate an additional connectivity check. Optionally, the sacc signal carries the same parameters as the scc signal, including two parameters, one is a parameter indicating the control role and the other is a parameter indicating the session participant. For a better description, in this embodiment of the present invention, the message that carries the sacc signal is described as an Additional Connectivity Check message. After receiving the sacc signal, the MGW performs an additional connectivity check. This process is the preceding update connectivity check. The connectivity check is not performed on candidate pairs that are already checked and is performed on only unchecked ones. Therefore, the connectivity check is named "additional connectivity check". "Additional connectivity check" has the same meaning in other embodiments of the present invention.

In this embodiment of the present invention, an MGW reports an nprc event to an MGC, to notify the MGC that a peer reflexive candidate is generated in the connectivity check process. After receiving the nprc event, the MGC sends an Update Connectivity Check Candidate message to the MGW. The MGW updates its candidate address pair according to the Update Connectivity Check Candidate message, thus changing the candidate address pair where the connectivity check is being performed. Under this circumstance, the connectivity check process requires intervention: When a new connectivity check from the beginning is required, the MGC may send an scc signal to the MGW, where the scc signal instructs the MGW to perform a connectivity check from the beginning; when an additional connectivity check is required, the MGC may send an sacc signal to the MGW, where the sacc signal instructs the MGW to perform an additional connectivity check, that is, the sacc signal instructs the MGW to perform a connectivity check on only the new candidate pair without checking the connectivity of those checked.

### Embodiment 4

In the third embodiment of the present invention, the MGC instructs the MGW to initiate an additional connectivity check because the MGW detects a new peer reflexive candidate, so that the candidate pair is updated. In the fourth embodiment of the present invention, however, the candidate pair may also be updated in other circumstances. For example, a new media stream (or referred to as stream) is added, or an existing media stream (or referred to as stream) is modified. For example, the MGC adds a new stream through a MODIFY message when a connectivity check is being performed or has been completed on the existing stream. Or, when a connectivity check is being performed or has been completed on the existing stream, the MGC updates the existing stream through a MODIFY message. In the preceding circumstances, a connectivity check must be initiated to check the connectivity of the new candidate pair. The connectivity check is not required to be performed on candidate pairs that are already checked.

In the preceding circumstances, the MGC instructs the MGW to perform an additional connectivity check. The instruction is carried in an sacc signal in this embodiment of the present invention. The MGW performs the additional connectivity check according to the instruction.

Before the MGC instructs the MGW to perform the additional connectivity check, or in the same H.248 message, the MGC can optionally send a message about the addition of a new media stream or modification of an existing stream to the MGW, so as to enable the MGW and the peer device to update their candidate address pairs.

From the preceding description, in the method for connectivity check in this embodiment of the present invention, the MGW performs an additional connectivity check according to an Additional Connectivity Check message sent by the MGC. With the technical solution in this embodiment of the present invention, when a new candidate is added or an existing candidate is modified, the connectivity check candidate pair list is refreshed. Connectivity checks may have already been performed on some candidate pairs included in the refreshed candidate pair list and are not repeated on these candidate pairs, so that the connectivity check efficiency is improved.

### Embodiment 5

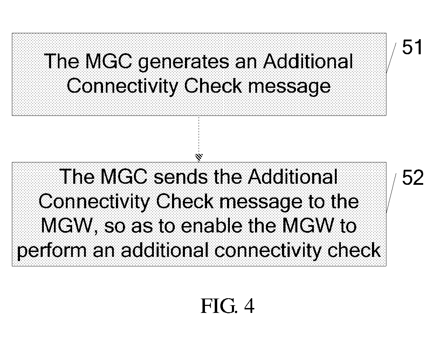

As shown in FIG. 4, a method for connectivity check in the fifth embodiment of the present invention includes the following steps:
Step 51: An MGC generates an Additional Connectivity Check message.
   As described in the preceding embodiment of the present invention, the Additional Connectivity Check message is generated by the MGC according to a new candidate discovered in a connectivity check process of the MGW. Or, when a new media stream is added or when an existing media stream is required to be modified, the MGC spontaneously generates the Additional Connectivity Check message according to practical requirements.
Step 52: The MGC sends the Additional Connectivity Check message to the MGW, so as to instruct the MGW to perform an additional connectivity check.
   If the Additional Connectivity Check message is generated by the MGC according to a new candidate discovered in the connectivity check process of the MGW, before step 51 where the MGC generates the Additional Connectivity Check message, the method further includes:
Step 50a: The MGC receives a peer reflexive candidate report message sent by the MGW.
   The peer reflexive candidate report message can be realized by extending the nprc event in the H.248 protocol. The method of extending the nprc event and the parameters carried in the event and related descriptions are the same as those in preceding descriptions and will not be further described here.
Step 50b: The MGC instructs the MGW and the peer device to update their candidate address pairs according to the peer reflexive candidate report message.

The MGC may instruct the MGW and the peer device to update their candidate address pairs in at least two approaches:
Approach 1: The MGC sends a Session Initiation Protocol (SIP) Update message to the peer device according to the peer reflexive candidate report message, so as to enable the peer device to update its candidate address pair; then, the MGC sends an Update Connectivity Check Candidate message to the MGW, so as to enable the MGW to update its candidate address pair.
Approach 2: The MGC sends an Update Connectivity Check Candidate message to the MGW according to the peer reflexive candidate report message, so as to enable the MGW to update its candidate address pair; then, the MGC sends an SIP UPDATE message to the peer device, so as to enable the peer device to update its candidate address pair.

In practice, the Update Connectivity Check Candidate message may be a MODIFY message where SDP carries information of the updated connectivity check candidates, or other messages that can carry the updated connectivity check candidate information.

Or, when a media stream is added and/or an existing media stream is modified, after or during step 51 where the MGC generates the Additional Connectivity Check message, the method further includes the following: The MGC sends a message that carries information about the addition of a new media stream and/or the modification of an existing media stream to the MGW, so as to enable the MGW and the peer device to update their candidate address pairs; then the MGW performs an additional connectivity check according to the instruction of the MGC.

From the preceding description, in the method for connectivity check in this embodiment of the present invention, the MGW performs an additional connectivity check according to an Additional Connectivity Check message sent by the MGC. Therefore, with the technical solution in this embodiment of the present invention, when a peer candidate pair is generated or when a service changes, a connectivity check may be performed on the new candidate pair so that the connectivity check efficiency is improved.

### Embodiment 6

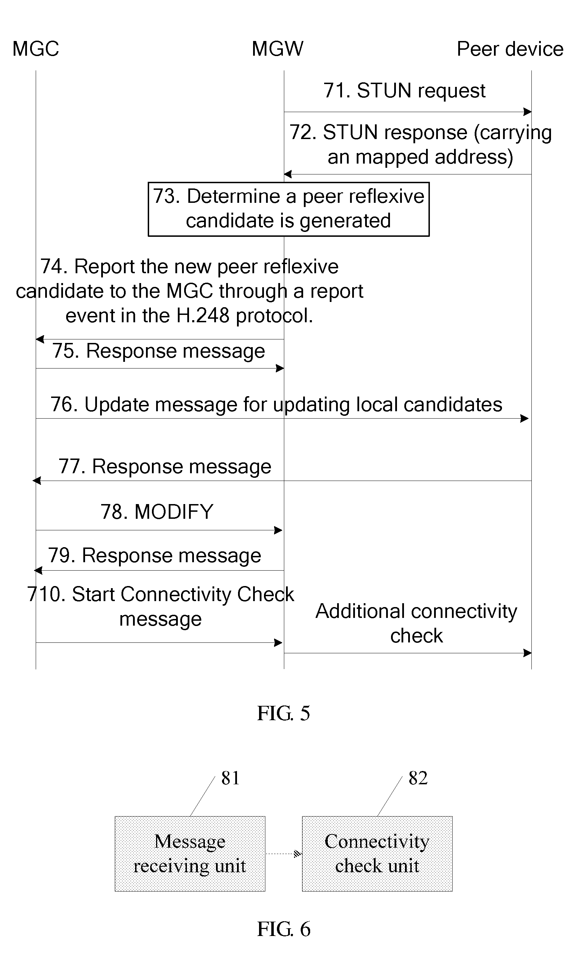

A procedure of the method for connectivity check provided in the sixth embodiment of the present invention will be described with reference to FIG. 5.

As shown in FIG. 5, the method for connectivity check in the sixth embodiment of the present invention includes the following steps:
Step 71: An MGW sends an STUN request to a peer device, requesting to perform a connectivity check on a candidate pair.
Step 72: The peer device returns an STUN response that carries a mapped address.
Step 73: The MGW determines that a peer reflexive candidate is generated according to the mapped address carried in the response message.
Step 74: The MGW reports the new peer reflexive candidate to the MGC through a report event in the H.248 protocol.
Step 75: The MGC sends a response message to the MGW.
Step 76: After knowing that a peer reflexive candidate is generated, the MGW sends an SIP UPDATE message or other messages to instruct the peer device to update its local candidate address pair.
Step 77: The peer device sends a 200 OK message in response to the UPDATE message.
Step 78: The MGC sends a MODIFY message to the MGW to update the connectivity check candidate information in SDP.
Step 79: The MGW sends a 200 OK message to the MGC.
Step 710: The MGC sends a Start Connectivity Check message to the MGW, instructing the MGW to perform a connectivity check on the candidate address pair. In this embodiment of the present invention, the Start Connectivity Check message is an Additional Connectivity Check message that instructs the MGW to check only the updated candidate address pair.

In the preceding process, the sequence of steps 76 and 77 and steps 78 and 79 may be inversed. That is, the MGC may first instruct the MGW to update its candidate address pair (the candidate pair stored on the MGW), and then instruct the peer device to update its candidate address pair (the candidate pair stored on the peer device).

From the preceding description, in the method for connectivity check in this embodiment of the present invention, the MGW performs an additional connectivity check according to an Additional Connectivity Check message sent by the MGC. Therefore, with the technical solution in this embodiment of the present invention, a connectivity check may be performed on a new candidate pair through the Additional Connectivity Check message, thus improving the efficiency of the connectivity check. In addition, in the connectivity check process, the peer reflexive candidate is discovered and used only in a connectivity check message and is not combined with another remote candidate to form a new candidate pair for a connectivity check. With the technical solution in this embodiment of the present invention, in a connectivity check process, the new peer reflexive candidate may be combined with another local candidate to form a candidate pair for a connectivity check, thus further improving the accuracy of the connectivity check.

Those skilled in the art may understand that all or part of the steps of the methods provided in the embodiments of the present invention may be implemented by hardware under the instruction of a computer program. The program may be stored in a computer readable storage medium and when the program is carried out, the steps of the methods in the preceding embodiments of the present invention are carried out. The storage medium may be a magnetic disk, a Compact Disk-Read Only Memory (CD-ROM), a Read Only Memory (ROM), or a Random Access Memory (RAM).

### Embodiment 7

As shown in FIG. 6, an MGW provided in a seventh embodiment of the present invention includes a message receiving unit 81 and a connectivity check unit 82. The message receiving unit 81 is configured to receive an Additional Connectivity Check message sent by an MGC. The connectivity check unit 82 is configured to perform an additional connectivity check according to the Additional Connectivity Check message.

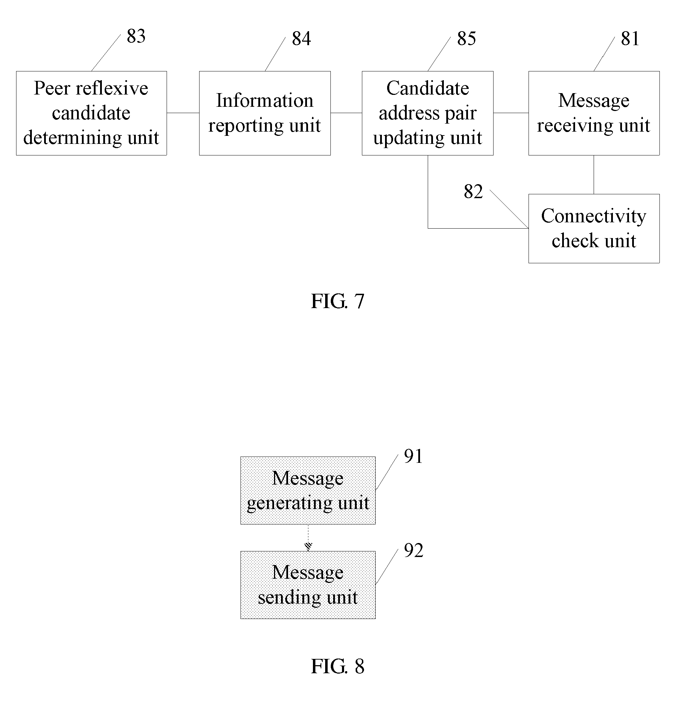

If the Additional Connectivity Check message is generated by the MGC according to a new candidate discovered in a connectivity check process of the MGW, the message receiving unit 81 is further configured to receive an STUN response message that is sent by the peer device and carries a mapped address. Under this circumstance, as shown in FIG. 7, the MGW further includes: a peer reflexive candidate determining unit 83, configured to determine that a new peer reflexive candidate is generated according to the mapped address carried in the response message; an information reporting unit 84, configured to send a peer reflexive candidate report message to the MGC, so as to enable the MGC to instruct the MGW to update its candidate address pair; and a candidate address pair updating unit 85, configured to receive an Update Connectivity Check Candidate message sent by the MGC and update its candidate address pair.

In addition, when a new media stream is added or an existing media stream is modified, the message receiving unit 81 is further configured to receive a message that is sent by the MGC and carries information about the addition of the new media stream and/or modification of the existing media stream.

The functions of the MGW in the second, third, and fourth embodiments of the present invention may be implemented by the MGW provided in this embodiment of the present invention.

The MGW in this embodiment of the present invention performs an additional connectivity check according to the Additional Connectivity Check message sent by the MGC. Therefore, with the technical solution in this embodiment of the present invention, when a peer candidate pair is generated or when a service changes, a connectivity check may be performed on the new candidate pair so that the efficiency of the connectivity check is improved.

### Embodiment 8

As shown in FIG. 8, an MGC provided in an eighth embodiment of the present invention includes a message generating unit 91 and a message sending unit 92. The message generating unit 91 is configured to generate an Additional Connectivity Check message. The message sending unit 92 is configured to send the Additional Connectivity Check message to the MGW, so as to enable the MGW to perform an additional connectivity check.

The message generating unit 91 generates an Additional Connectivity Check message according to the previous connectivity check results of the MGW or according to service requirements.

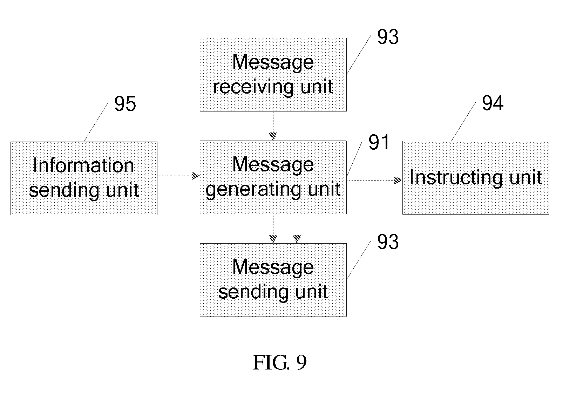

In addition, as shown in FIG. 9, the MGC further includes:
a message receiving unit 93, configured to receive a peer reflexive candidate report message sent by the MGW;
an instructing unit 94, configured to instruct the MGW and the peer device to update their candidate address pairs according to the peer reflexive candidate report message; and
an information sending unit 95, configured to send a message that carries information about the addition of a new media stream and/or the modification of an existing media stream to the MGW.

The functions of the MGC in the fifth, sixth, and seventh embodiments of the present invention may be implemented by the MGC provided in this embodiment of the present invention.

To sum up, in the method, device, and system for connectivity check in the embodiments of the present invention, the MGW performs an additional connectivity check according to an Additional Connectivity Check message sent by the MGC. Therefore, with the technical solution in the embodiments of the present invention, when a peer candidate pair is generated or when a service changes, a connectivity check may be performed on the new candidate pair so that the efficiency of the connectivity check is improved.

In addition, the embodiments of the present invention are mainly applicable to NGN and IP Multimedia Subsystem (IMS) networks but are not limited to such networks.

Although the present invention has been described in detail through some exemplary embodiments, the present invention is not limited to such embodiments. It is apparent that those skilled in the art can make various modifications and variations to the invention without departing from the spirit and scope of the present invention. The invention is intended to cover the modifications and variations provided that they fall within the protection scope defined by the claims or their equivalents.

## Claims

1. A method for connectivity check, comprising:
receiving, by a Media Gateway, MGW, an Additional Connectivity Check message sent by a Media Gateway Controller, MGC; and
performing, by the MGW, an additional connectivity check according to the Additional Connectivity Check message.

2. The method of claim 1, before the step of receiving the Additional Connectivity Check message sent by the MGC, further comprising:
receiving, by the MGW, a Simple Traversal of UDP Through Network Address Translators, STUN, response message sent by a peer device, wherein the STUN response message carries a mapped address;
determining, by the MGW and according to the mapped address carried in the STUN response message, that a peer reflexive candidate is generated;
sending, by the MGW, a peer reflexive candidate report message to the MGC, so as to enable the MGC to instruct the MGW to update its candidate address pair; and
receiving, by the MGW, an Update Connectivity Check Candidate message sent by the MGC, and updating its candidate address pair.

3. The method of claim 2, wherein the peer reflexive candidate report message carries a new peer reflexive candidate event in the H.248 protocol.

4. The method of claim 3, wherein the new peer reflexive candidate event in the H.248 protocol comprises one or more of the following parameters: streams, groupID, foundationID, componentID, and Internet Protocol, IP, address and port number of the peer reflexive candidate.

5. The method of claim 1, wherein the Additional Connectivity Check message carries a Send Additional Connectivity Check signal in the H.248 protocol.

6. The method of claim 1, wherein, before or when the MGW receives the Additional Connectivity Check message sent by the MGC, the method further comprises:
receiving, by the MGW, a message that is sent by the MGC and carries information about the addition of a new media stream and/or modification of an existing media stream, and updating its candidate address pair.

7. A method for connectivity check, comprising:
generating, by a Media Gateway Controller, MGC, an Additional Connectivity Check message; and
sending, by the MGC, the Additional Connectivity Check message to a Media Gateway, MGW, so as to enable the MGW to perform an additional connectivity check.

8. The method of claim 7, wherein, before the step of generating the Additional Connectivity Check message, the method further comprises:
receiving, by the MGC, a peer reflexive candidate report message sent by the MGW; and
instructing, by the MGC, the MGW and peer device to update their candidate address pairs according to the peer reflexive candidate report message.

9. The method of claim 8, wherein, the step of instructing the MGW and the peer device to update their candidate address pairs according to the peer reflexive candidate report message comprises:
sending, by the MGC, an update message to the peer device according to the peer reflexive candidate report message, so as to enable the peer device to update its candidate address pair, and then sending an Update Connectivity Check Candidate message to the MGW, so as to enable the MGW to update its candidate address pair;
or
sending, by the MGC, an Update Connectivity Check Candidate message to the MGW according to the peer reflexive candidate report message, so as to enable the MGW to update its candidate address pair, and then sending an update message to the peer device, so as to enable the peer device to update its candidate address pair.

10. The method of claim 8 or 9, wherein the peer reflexive candidate report message carries a new peer reflexive candidate event in the H.248 protocol.

11. The method of claim 10, wherein the new peer reflexive candidate event in the H.248 protocol comprises the following parameters: streamID, groupID, foundationID, componentID, and Internet Protocol, IP, address and port number of the peer reflexive candidate.

12. The method of claim 7, wherein the Additional Connectivity Check message carries a Send Additional Connectivity Check signal in the H.248 protocol.

13. The method of claim 7, wherein, after or when the MGC generates the Additional Connectivity Check message, the method further comprises:
sending, by the MGC, a message which carries information about the addition of a new media stream and/or modification of an existing media stream so as to enable the MGW and the peer device to update their candidate address pairs.

14. A Media Gateway, MGW, comprising:
a message receiving unit, configured to receive an Additional Connectivity Check message sent by a Media Gateway Controller, MGC; and
a connectivity check unit, configured to perform an additional connectivity check according to the Additional Connectivity Check message.

15. The MGW of claim 14, wherein the message receiving unit is further configured to receive a Simple Traversal of UDP Through Network Address Translators, STUN, response message sent by a peer device, wherein the response message carries a mapped address; and
the MGW further comprises:
a peer reflexive candidate determining unit, configured to determine that a peer reflexive candidate is generated according to the mapped address carried in the response message;
an information reporting unit, configured to send a peer reflexive candidate report message to the MGC, so as to enable the MGC to instruct the MGW to update its candidate address pair; and
a candidate address pair updating unit, configured to receive an Update Connectivity Check Candidate message sent by the MGC and update its candidate address pair.

16. The MGW of claim 15, wherein the message receiving unit is further configured to receive a message that is sent by the MGC and carries information about the addition of a new media stream and/or modification of an existing media stream.

17. A Media Gateway Controller, MGC, comprising:
a message generating unit, configured to generate an Additional Connectivity Check message; and
a message sending unit, configured to send the Additional Connectivity Check message to a Media Gateway, MGW, so as to enable the MGW to perform an additional connectivity check.

18. The MGC of claim 17, further comprising:
a message receiving unit, configured to receive a peer reflexive candidate report message sent by the MGW; and
an instructing unit, configured to instruct the MGW and peer device to update their candidate address pairs according to the peer reflexive candidate report message.

19. The MGC of claim 17, further comprising:
an information sending unit, configured to send a message that carries information about the addition of a new media stream and/or modification of an existing media stream to the MGW.

20. A system for connectivity check, comprising a Media Gateway, MGW, and a Media Gateway Controller, MGC, wherein:
the MGW is configured to receive an Additional Connectivity Check message sent by the MGC and perform an additional connectivity check according to the Additional Connectivity Check message; and
the MGC is configured to generate an Additional Connectivity Check message and send the Additional Connectivity Check message to the MGW, so as to enable the MGW to perform an additional connectivity check.
